# EUROPÄISCHE PATENTSCHRIFT

(11) **EP 2 417 482 B1**
(45) Veröffentlichungstag und Bekanntmachung des Hinweises auf die Patenterteilung: **09.01.2019**
(21) Anmeldenummer: 10736595.9
(22) Anmeldetag: 12.04.2010
(51) Int. Cl.: G02B 6/02, C03C 25/106, C08L 71/00, C09D 171/00

(54) **OPTISCHE FESTADER**
SOLID CORE OPTIC FIBRE
FIBRE OPTIQUE SOLIDE

(30) Priorität: 10.04.2009 DE 102009016834
(43) Veröffentlichungstag der Anmeldung: 15.02.2012
(73) Patentinhaber: Hottinger Baldwin Messtechnik GmbH, 64293 Darmstadt (DE)
(72) Erfinder: KREUZER, Manfred, 64331 Weiterstadt (DE); HAASE, Karl-Heinz, 64319 Pfungstadt (DE); KIPP, Tobias, 63322 Rödermark (DE); MAUL, Jochen, 55118 Mainz (DE); RUPPIN, Hagen, 64569 Nauheim (DE); SCHULZ, Rudolf, 64331 Weiterstadt (DE); GÜNTHER, Bernd, 76185 Karlsruhe (DE)
(74) Vertreter: Staudte, Ralph
(86) Internationale Anmeldenummer: PCT/DE2010/000411
(87) Internationale Veröffentlichungsnummer: WO 2010/115416

(56) Entgegenhaltungen:
- EP-A1- 0 157 466
- EP-A2- 0 231 581
- WO-A1-2009/106576
- DE-A1-102004 045 775
- DE-A1-102006 012 831
- GB-A- 2 214 652

## Beschreibung

Die Erfindung betrifft eine optische Festader, wie sie in der Lichtwellenleitertechnik zur Übertragung optischer Signale verwendet wird, aber auch zur Übertragung von Licht für Beleuchtungs- oder Behandlungszwecke, z. B. im medizinischen Bereich der minimalinvasiven Chirurgie.

Lichtwellenleiter haben ein Übertragungsmedium für Licht aus Glas oder Kunststoff, nachfolgend Faser genannt. Zum Schutz der Faser wird diese mit einer Umhüllung versehen, deren Material und Struktur den Schutzanforderungen der Faser angepasst ist. Bei einer optischen Festader, wie sie z. B. in der europäischen Patentschrift EP 1 456 704 B1 beschrieben ist, wird die Umhüllung unmittelbar auf eine Beschichtung (das sogenannte Coating) der Faser aufgebracht. Dazu werden Extrudierverfahren eingesetzt. Der in der EP 1 456 704 B1 beschriebene Aufbau der Festader geht davon aus, dass die Umhüllung auf der Faser gleitet. Dazu werden der Umhüllung Komponenten zugefügt, die diese Gleiteigenschaften bewirken, wie z. B. Talkum oder Zwischenschichten aus Teflon.

Es gibt jedoch Anwendungsfälle, bei denen ein Gleiten der Faser in der Umhüllung nicht erwünscht ist. So ist in der deutschen Patentschrift DE 10 2004 045 775 B4 dargelegt, dass insbesondere bei Temperaturschwankungen, wie sie im Motorraum eines Fahrzeugs auftreten, die Umhüllung sich gegenüber der Faser verschiebt, d. h. eine Relativbewegung zwischen der Faser und der Umhüllung auftritt. Die Ursache dafür sind die unterschiedlichen Ausdehnungskoeffizienten des Fasermaterials gegenüber dem Material der Umhüllung. Dieser Effekt wird "Pistoning" genannt und hat negative Auswirkungen auf die Qualität der Signalübertragung, da sich durch die Verschiebung der Faser bezüglich des Mantels die Faserenden an den Koppelstellen voneinander entfernen können. Es gibt daher eine Reihe von Vorschlägen, das Pistoning zu vermeiden, die in den Dokumenten DE 19914743 A1, JP 04127107 A, DE 60104497 T2, WO 00/60382, KR 1020010113717 A, EP 1174746 A1 oder DE 10044585 A1 beschrieben wurden.

Das Pistoning entsteht auch dann, wenn die Festader gebogen wird, da sich das Material der Umhüllung auf der Außenseite des Biegeradius dehnt und auf der Innenseite staucht, sodass zwischen der Faseroberfläche und der Innenseite der Umhüllung Scherkräfte entstehen, die eine Verschiebung der Faser bezüglich der Umhüllung bewirken können. Durch Stick-Slip-Effekte können sich mechanische Spannungen aufbauen, die die optischen Eigenschaften der Faser negativ beeinflussen können.

GB 2 214 652 A offenbart eine optische Festader mit einer Glasfaser mit einem Mantel, wobei der Mantel aus Poly-Ether-Ether-Keton besteht und der Außendurchmesser des Mantels etwa 1 mm beträgt. EP 0 157 466 A1 offenbart eine elektrische Festader mit einem Mantel aus Poly-Ether-Ether-Keton, der eine Zumischung eines anorganischen Füllstoffs aufweist.

Es ist daher eine Aufgabe der Erfindung, eine optische Festader mit einem geringen oder vorzugsweise ohne Pistoning-Effekt bereitzustellen, sodass diese Festader Temperaturschwankungen und starken mechanischen Deformationen ausgesetzt werden kann, ohne dass die Übertragungsqualität der optischen Faser negativ beeinflusst wird. Eine weitere Aufgabe der Erfindung besteht darin, ein Verfahren zur Herstellung einer derartigen optischen Festader bereitzustellen.

Diese Aufgaben werden mit einer optischen Festader nach Anspruch 1 und einem Verfahren nach Anspruch 10 gelöst.

Nach Anspruch 1 weist die optische Festader eine Glasfaser mit einem Mantel auf, wobei der Mantel folgende Zusammensetzung aufweist: eine Mischung aus Poly Ether Ether Keton und einem anorganischen Füllstoff in einer Zumischung von wenigstens 10 und maximal 40 Gewichtsprozenten bei einer Korngröße von 0,08 µm bis 12 µm. Der Außendurchmesser des Mantels beträgt 0,2 mm bis 1,2 mm. Das Verhältnis D/d zwischen dem Außendurchmesser D des Mantels und dem Durchmesser d der Glasfaser beträgt 2 bis 6. Ein Druck des Mantels auf die Glasfaser ist derart, dass im Wesentlichen keine Relativbewegung zwischen der Glasfaser und dem Mantel auftreten kann.

Die erfindungsgemäße optische Festader weist sehr gute mechanische Eigenschaften unter Beibehaltung der erforderlichen optischen Eigenschaften auf. Die Festader hat keinen nachweisbaren Pistoning-Effekt, auch nicht bei auf die Faserlänge verteilten Temperaturunterschieden. Weiterhin ist auch kein Pistoning-Effekt zu verzeichnen, wenn die Festader mehrfach in unterschiedliche Richtungen gebogen wird.

Als positiver Zusatzeffekt ist eine hohe Plastizität zu erwähnen, die reversibel ist. Die Festader lässt sich z. B. um 90 Grad bleibend biegen. Es ist sogar möglich, einen Knoten unter Beibehaltung eines Mindestradius herzustellen. Der Knoten kann auch wieder gelöst und die Festader wieder geradegebogen werden, ohne die optischen Parameter zu beeinträchtigen. Diese hohe Plastizität ist im Vergleich zu aus dem Stand der Technik bekannten Festadern nicht bekannt und besonders dann von Bedeutung, wenn die Festader z. B. im Motorraum eines Fahrzeugs an einer stark verwinkelten Wandung verlegt werden soll, oder wenn eine Vielzahl von Festadern zu einem Kabelbaum gebunden werden müssen. Durch Flechten oder Verdrillen wird eine Eigenstabilität des Kabelbaumes erreicht, ohne dass die Festadern mit Fixierbändern zusammengebunden werden müssen. Die Festader ist auch im medizinischen Bereich einsetzbar, wenn es z. B. erforderlich ist, sehr kleine Bereiche auszuleuchten oder zu behandeln. Auf Grund der Plastizität kann die Festader an ihrem Endabschnitt vorgebogen werden, sodass der medizinische Behandlungsabschnitt besser erreichbar ist.

Nach Anspruch 2 beträgt der Druck des Mantels auf die Glasfaser wenigstens 120 N/mm². Bei einem derartigen Druck kann im Wesentlichen keine Relativbewegung zwischen der Glasfaser und dem Mantel auftreten. Somit ist weder bei Temperaturschwankungen noch bei mechanischen Deformationen ein Pistoning-Effekt zu verzeichnen.

Nach Anspruch 3 weist die Glasfaser einen Glaskern mit einer Beschichtung aus einem anorganisch-organischen Hybridpolymer auf. Die Beschichtung bzw. das Coating aus einem anorganisch-organischen Hybridpolymer hat eine chemische Stabilität, die für einen Prozess des Extrudierens des Mantels auf die Glasfaser bei der Herstellung der optischen Festader ausreicht. Dies ist bei den sonst typischerweise verwendeten Coatings aus Acrylat und Polyimid nicht der Fall.

Nach Anspruch 4 ist der anorganische Füllstoff ein Silikat, nach Anspruch 5 ist der anorganische Füllstoff ein Schichtsilikat, und nach Anspruch 6 ist der anorganische Füllstoff Talkum, Kreide, Kalziumkarbonat, Bariumsulfat, Bornitrid, Siliziumdioxid oder Bentonit. Die genannten Füllstoffe können die vorstehend aufgeführten Eigenschaften der erfindungsgemäßen optischen Festader ermöglichen, d. h. keinen nachweisbaren Pistoning-Effekt und eine hohe Plastizität.

Nach Anspruch 7 beträgt die Zumischung des anorganischen Füllstoffs wenigstens 25 Gewichtsprozente und maximal 40 Gewichtsprozente. Dadurch kann eine weitere Verbesserung der plastischen Eigenschaften erreicht werden.

Nach Anspruch 8 beträgt die Zumischung des anorganischen Füllstoffs 27 Gewichtsprozente und maximal 33 Gewichtsprozente. So kann eine noch weitere Verbesserung der plastischen Eigenschaften erreicht werden.

Nach Anspruch 9 beträgt die Korngröße wenigstens 0,1 µm und maximal 10 µm. Diese Korngröße ermöglicht eine gute Verbindung zwischen dem Mantel und der Glasfaser.

Nach Anspruch 10 weist ein Verfahren zur Herstellung einer optischen Festader die nachfolgenden Schritten auf: Bereitstellen einer Glasfaser und Extrudieren eines Mantels auf die Glasfaser. Dabei weist der Mantel folgende Zusammensetzung auf: eine Mischung aus Poly Ether Ether Keton und einem anorganischen Füllstoff in einer Zumischung von wenigstens 10 und maximal 40 Gewichtsprozenten bei einer Korngröße von 0,08 µm bis 12 µm. Der Außendurchmesser des Mantels beträgt 0,2 mm bis 1,2 mm. Das Verhältnis D/d zwischen dem Außendurchmesser D des Mantels und dem Durchmesser d der Glasfaser beträgt 2 bis 6. Nach Beendigung des Verfahrens ist ein Druck des Mantels auf die Glasfaser derart, dass im Wesentlichen keine Relativbewegung zwischen der Glasfaser und dem Mantel auftreten kann.

Eine mit dem erfindungsgemäßen Verfahren hergestellte optische Festader hat sehr gute mechanische Eigenschaften unter Beibehaltung der erforderlichen optischen Eigenschaften, keinen nachweisbaren Pistoning-Effekt und eine hohe Plastizität wie vorstehend ausführlich erläutert.

Nach Anspruch 11 werden Parameter des Extrudierens derart gewählt, dass nach Beendigung des Verfahrens der Druck des Mantels auf die Glasfaser wenigstens 120 N/mm² beträgt. Bei einem derartigen Druck kann im Wesentlichen keine Relativbewegung zwischen der Glasfaser und dem Mantel auftreten. Somit ist weder bei Temperaturschwankungen noch bei mechanischen Deformationen ein Pistoning-Effekt zu verzeichnen.

Nach Anspruch 12 weist der Schritt des Bereitstellens einer Glasfaser den Schritt des Bereitstellens eines Glaskerns und den Schritt des Beschichtens des Glaskerns mit einer Beschichtung aus einem anorganisch-organischen Hybridpolymer auf. Die Beschichtung bzw. das Coating aus einem anorganisch-organischen Hybridpolymer hat eine chemische Stabilität, die für den Prozess des Extrudierens des Mantels auf die Glasfaser bei der Herstellung der optischen Festader ausreicht. Dies ist bei den sonst typischerweise verwendeten Coatings aus Acrylat und Polyimid nicht der Fall.

Nach Anspruch 13 ist der anorganische Füllstoff ein Silikat, nach Anspruch 14 ist der anorganische Füllstoff ein Schichtsilikat, und nach Anspruch 15 ist der anorganische Füllstoff Talkum, Kreide, Kalziumkarbonat, Bariumsulfat, Bornitrid, Siliziumdioxid oder Bentonit. Die genannten Füllstoffe können die vorstehend aufgeführten Eigenschaften der erfindungsgemäßen optischen Festader ermöglichen, d. h. keinen nachweisbaren Pistoning-Effekt und eine hohe Plastizität.

Die Erfindung wird nachfolgend anhand eines Ausführungsbeispiels in Verbindung mit schematischen Zeichnungen näher erläutert:
- Fig. 1a: zeigt eine optische Festader gemäß dem Ausführungsbeispiel im Längsschnitt in vergrößerter Darstellung.
- Fig. 1b: zeigt die optische Festader gemäß dem Ausführungsbeispiel im Querschnitt in vergrößerter Darstellung.
- Fig. 2: zeigt eine erste Applikation der optischen Festader gemäß dem Ausführungsbeispiel.
- Fig. 3: zeigt eine zweite Applikation der optischen Festader gemäß dem Ausführungsbeispiel.
- Fig. 4a, b: zeigen Beispiele für die Plastizität der optischen Festader gemäß dem Ausführungsbeispiel.
- Fig. 5: zeigt ein Flussdiagramm, das grundlegende Schritte eines Verfahrens zur Herstellung der optischen Festader gemäß dem Ausführungsbeispiel veranschaulicht.

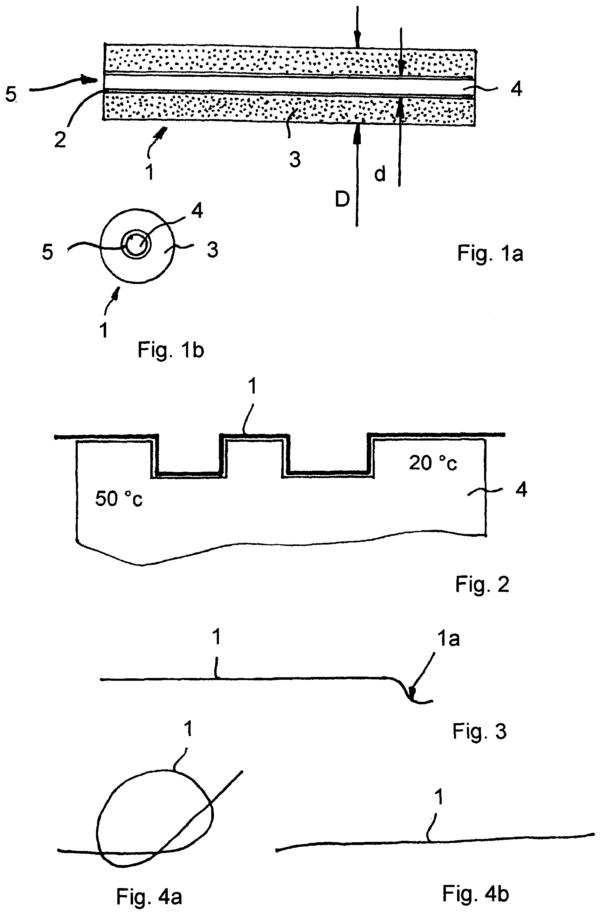

Die Fig. 1a zeigt eine optische Festader 1 gemäß dem Ausführungsbeispiel im Längsschnitt in vergrößerter Darstellung. Mit Bezugszeichen 2 ist eine Glasfaser und mit Bezugszeichen 3 eine Umhüllung bzw. ein Mantel bezeichnet. Die Fig. 1b zeigt dazu den Querschnitt.

Der Mantel 3 kann folgende Zusammensetzung aufweisen: eine Mischung aus Poly Ether Ether Keton und einem anorganischen Füllstoff in einer Zumischung von beispielsweise wenigstens 10 und maximal 40 Gewichtsprozenten bei einer Korngröße von z. B. 0,08 µm bis 12 µm. Nachstehend ist das Poly Ether Ether Keton als PEEK bezeichnet, während die Mischung aus PEEK und dem anorganischen Füllstoff als PEEKF bezeichnet ist.

Bei dem anorganischen Füllstoff kann es sich beispielsweise um Talkum (Magnesiumsilikathydrat, Mg3Si4O10(OH)2), Kreide, Kalziumkarbonat (CaCO3), Bariumsulfat (BaSO4), Bornitrid (BN), Siliziumdioxid (SiO2), Bentonit (Hauptbestandteil (60-80%) Montmorillonit (Aluminiumschichtsilikat, Al2[(OPH)2/ Si4O10]n H2O)), Quarz (SiO2), Aluminiumoxid (Al2O3), Siliziumcarbid (SiC), Glashohlkügelchen, gefällte Kieselsäure, Zinksulfid (ZnS) oder Titanoxid (TiO2) handeln.

Die Glasfaser 2 kann einen Glaskern 4 und ein Coating bzw. eine Beschichtung 5 aufweisen. Bei dem Material der Beschichtung 5 kann es sich beispielsweise um ORMOCER®, d. h. ein anorganisch-organisches Hybridpolymer, handeln.

Der Außendurchmesser D des Mantels 3 kann beispielsweise 0,2 mm bis 1,2 mm betragen. Das Verhältnis D/d zwischen dem Außendurchmesser D des Mantels 3 und dem Durchmesser d der Glasfaser 2 kann z. B. 2 bis 6 betragen. Bei dem Ausführungsbeispiel beträgt der Durchmesser d der Glasfaser 0,185 mm, und der Außendurchmesser D des Mantels beträgt 0,6 mm.

Ein Druck des Mantels 3 auf die Glasfaser 2 kann derart sein, dass im Wesentlichen keine Relativbewegung zwischen der Glasfaser 2 und dem Mantel 3 und somit auch kein Pistoning-Effekt auftreten kann. Dabei kann der Druck des Mantels 3 auf die Glasfaser 2 beispielsweise zwischen 120 N/mm² und 216 N/mm² betragen.

Der Mantel 3, in dem der anorganische Füllstoff verteilt ist, wird bei der Herstellung der optischen Festader 1 in einem Extrudierverfahren auf die Glasfaser 2 aufgebracht. Der Extrudierprozess erfolgt bei hoher Temperatur, da der Schmelzpunkt von PEEKF oberhalb von 370°C liegt. Beim langsamen Abkühlen und ab einer Temperaturgrenze, bei der die Verfestigung das PEEKF beginnt, entsteht pro Grad Abkühlung ein Druck durch den Unterschied der Ausdehnungen bei den Materialien der Glasfaser 2 und des Mantels 3. Beispielsweise kann Glas einen Ausdehnungskoeffizienten von 0,5 ppm/K und PEEKF einen Ausdehnungskoeffizienten von 25 ppm/K aufweisen, wobei sich ein Delta von 24,5 ppm/K ergibt. Die Temperaturgrenze, bei der die Verfestigung das PEEKF beginnt, kann beispielsweise bei etwa 170 °C liegen. Dann ergibt sich beispielsweise bei einer Abkühlung von ca. 170 °C bis ca. 20 °C folgende beispielhafte Rechnung: 150 K x 24,5 ppm/K.

Somit führen die unterschiedlichen Ausdehnungen der Materialien der Glasfaser 2 und des Mantels 3 zu einem Schrumpfprozess, der in einer Schrumpfverbindung zwischen dem Mantel 3 und der Glasfaser 2 resultiert. Dabei krallt sich der Mantel 3 regelrecht an der Glasfaser 2 fest. Dies wird durch spezifische Parameter des Extrudierens und die spezifische Zusammensetzung des Mantelmaterials PEEKF erreicht.

Die Fig. 2 zeigt eine erste Applikation der optischen Festader 1 gemäß dem Ausführungsbeispiel. Bei dieser Applikation ist die optische Festader 1 auf einem verwinkelten Untergrund 6 verlegt. Aufgrund der Plastizität kann die optische Festader 1 in dieser Form vorgeformt werden, sodass das Verlegen der optischen Festader 1 einfacher ist. Auch ein Temperaturunterschied von beispielsweise 30 °C wie in der Fig. 2 dargestellt verursacht keine Beeinträchtigung der optischen und plastischen Eigenschaften der optischen Festader 1.

Die Fig. 3 zeigt eine zweite Applikation der optischen Festader 1 gemäß dem Ausführungsbeispiel. Bei dieser Applikation wird die optische Festader 1 zur Beleuchtung bei einem medizinischen Einsatz verwendet. Ein Endabschnitt 1a der Festader 1 ist vorgebogen, damit er besser z. B. in ein enges Blutgefäß eingeführt werden kann.

Die Fig. 4a, b zeigen Beispiele für die Plastizität der optischen Festader 1 gemäß dem Ausführungsbeispiel. Bei diesen Beispielen hat die optische Festader 1 einen Außendurchmesser D von 0,7 mm, und die Glasfaser 2 hat einen Durchmesser von 0,185 mm. Bei dieser Dimensionierung lässt sich die optische Festader 1 wie in der Fig. 4a gezeigt zu einem Kreis mit einem minimalen Durchmesser von 20 mm bleibend deformieren und anschließend wie in der Fig. 4b gezeigt wieder strecken. Weiterhin lässt sich die optische Festader 1 bei einem minimalen Radius von 2 mm um 90 Grad bleibend verformen und anschließend wieder gerade ausrichten.

Es ist für den Fachmann klar, dass es für diese spezifischen plastischen Eigenschaften eine Reihe von weiteren Anwendungen gibt.

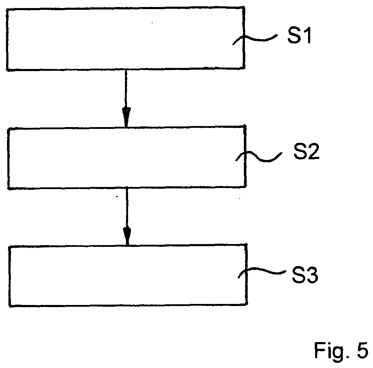

Die Fig. 5 zeigt ein Flussdiagramm, das grundlegende Schritte eines Verfahrens zur Herstellung der optischen Festader 1 gemäß dem Ausführungsbeispiel veranschaulicht. In einem Schritt S1 wird der Glaskern 4 bereitgestellt. In einem Schritt S2 wird der Glaskern 4 mit der Beschichtung 5 beschichtet. Die Schritte S1 und S2 bilden zusammen einen Schritt des Bereitstellens der Glasfaser 2. In einem Schritt S3 wird der Mantel 3 auf die Glasfaser 2 extrudiert.

Bei dem Verfahren zur Herstellung der optischen Festader 1 gemäß dem Ausführungsbeispiel können die Parameter des Extrudierens so gewählt werden, dass nach Beendigung des Verfahrens ein Druck des Mantels 3 auf die Glasfaser 2 derart ist, dass im Wesentlichen keine Relativbewegung zwischen der Glasfaser 2 und dem Mantel 3 und somit auch kein Pistoning-Effekt auftreten kann. Dabei kann der Druck des Mantels 3 auf die Glasfaser 2 beispielsweise zwischen 120 N/mm² und 216 N/mm² betragen.

## Patentansprüche

1. Optische Festader (1) mit einer Glasfaser (2) mit einem Mantel (3), wobei:
- der Außendurchmesser des Mantels (3) 0,2 mm bis 1,2 mm beträgt,
- das Verhältnis D/d zwischen dem Außendurchmesser D des Mantels (3) und dem Durchmesser d der Glasfaser (2) 2 bis 6 beträgt,
**dadurch gekennzeichnet, dass**
- der Mantel (3) folgende Zusammensetzung aufweist: eine Mischung aus Poly-Ether-Ether-Keton und einem anorganischen Füllstoff in einer Zumischung von wenigstens 10 und maximal 40 Gewichtsprozenten bei einer Korngröße von 0,08 µm bis 12 µm, und
- ein Druck des Mantels (3) auf die Glasfaser (2) derart ist, dass im Wesentlichen keine Relativbewegung zwischen der Glasfaser (2) und dem Mantel (3) auftreten kann.

2. Optische Festader (1) nach Anspruch 1, wobei der Druck des Mantels (3) auf die Glasfaser (2) wenigstens 120 N/mm² beträgt.

3. Optische Festader (1) nach Anspruch 1, wobei die Glasfaser (2) einen Glaskern (4) mit einer Beschichtung (5) aus einem anorganisch-organischen Hybridpolymer aufweist.

4. Optische Festader (1) nach Anspruch 1, wobei der anorganische Füllstoff ein Silikat ist.

5. Optische Festader (1) nach Anspruch 1, wobei der anorganische Füllstoff ein Schichtsilikat ist.

6. Optische Festader (1) nach Anspruch 1, wobei der anorganische Füllstoff Talkum, Kreide, Kalziumkarbonat, Bariumsulfat, Bornitrid, Siliziumdioxid oder Bentonit ist.

7. Optische Festader (1) nach Anspruch 1, wobei die Zumischung des anorganischen Füllstoffs wenigstens 25 Gewichtsprozente und maximal 40 Gewichtsprozente beträgt.

8. Optische Festader (1) nach Anspruch 1, wobei die Zumischung des anorganischen Füllstoffs wenigstens 27 Gewichtsprozente und maximal 33 Gewichtsprozente beträgt.

9. Optische Festader (1) nach Anspruch 1, wobei die Korngröße wenigstens 0,1 µm und maximal 10 µm beträgt.

10. Verfahren zur Herstellung einer optischen Festader (1), mit den Schritten:
- Bereitstellen (S1, S2) einer Glasfaser (2), und
- Extrudieren (S3) eines Mantels (3) auf die Glasfaser (2), wobei
- der Außendurchmesser des Mantels (3) 0,2 mm bis 1,2 mm beträgt,
- das Verhältnis D/d zwischen dem Außendurchmesser D des Mantels (3) und dem Durchmesser d der Glasfaser (2) 2 bis 6 beträgt,
**dadurch gekennzeichnet, dass**
- der Mantel (3) folgende Zusammensetzung aufweist: eine Mischung aus Poly-Ether-Ether-Keton und einem anorganischen Füllstoff in einer Zumischung von wenigstens 10 und maximal 40 Gewichtsprozenten bei einer Korngröße von 0,08 µm bis 12 µm, und
- nach Beendigung des Verfahrens ein Druck des Mantels (3) auf die Glasfaser (2) derart ist, dass im Wesentlichen keine Relativbewegung zwischen der Glasfaser (2) und dem Mantel (3) auftreten kann.

11. Verfahren nach Anspruch 10, wobei Parameter des Extrudierens derart gewählt werden, dass nach Beendigung des Verfahrens der Druck des Mantels (3) auf die Glasfaser (2) wenigstens 120 N/mm² beträgt.

12. Verfahren nach Anspruch 10, wobei der Schritt des Bereitstellens einer Glasfaser (2) den Schritt (S1) des Bereitstellens eines Glaskerns (4) und den Schritt (S2) des Beschichtens des Glaskerns (4) mit einer Beschichtung (5) aus einem anorganisch-organischen Hybridpolymer aufweist.

13. Verfahren nach Anspruch 10, wobei der anorganische Füllstoff ein Silikat ist.

14. Verfahren nach Anspruch 10, wobei der anorganische Füllstoff ein Schichtsilikat ist.

15. Verfahren nach Anspruch 10, wobei der anorganische Füllstoff Talkum, Kreide, Kalziumkarbonat, Bariumsulfat, Bornitrid, Siliziumdioxid oder Bentonit ist.

## Claims

1. Solid core optical fibre (1) comprising a glass fibre (2), which is provided with a sheath (3), wherein:
- the outside diameter of the sheath (3) is 0.2 mm to 1.2 mm,
- the ratio D/d between the outside diameter D of the sheath (3) and the diameter d of the glass fibre (2) is 2 to 6,
**characterized in that**
- the sheath (3) comprises the following composition: a mixture of poly-ether ether ketone and an inorganic filler in an admixture of at least 10 and maximum 40 percent by weight, with a particle size of 0.08 µm to 12 µm, and
- a pressure of the sheath (3) on the glass fibre (2) is such that essentially no relative movement between the glass fibre (2) and the sheath (3) can occur.

2. Solid core optical fibre (1) according to claim 1, wherein the pressure of the sheath (3) on the glass fibre (2) is at least 120 N/mm².

3. Solid core optical fibre (1) according to claim 1, wherein the glass fibre (2) comprises a glass core (4) having a coating (5) of inorganic-organic hybrid polymer.

4. Solid core optical fibre (1) according to claim 1, wherein the inorganic filler is a silicate.

5. Solid core optical fibre (1) according to claim 1, wherein the inorganic filler is a laminated silicate.

6. Solid core optical fibre (1) according to claim 1, wherein the inorganic filler is talcum, chalk, calcium carbonate, barium sulfate, boron nitride, silicon dioxide or bentonite.

7. Solid core optical fibre (1) according to claim 1, wherein the admixture of the inorganic filler is at least 25 percent by weight and maximum 40 percent by weight.

8. Solid core optical fibre (1) according to claim 1, wherein the admixture of the inorganic filler is at least 27 percent by weight and maximum 33 percent by weight.

9. Solid core optical fibre (1) according to claim 1, wherein the particle size is at least 0.1 µm and maximum 10 µm.

10. Method of making a solid core optical fibre (1), which comprises the following steps:
- providing (S1, S2) of a glass fibre (2), and
- extruding (S3) of a sheath (3) onto the glass fibre (2), wherein
- the outside diameter of the sheath (3) is 0.2 mm to 1.2 mm,
- the ratio D/d between the outside diameter D of the sheath (3) and the diameter d of the glass fibre (2) is 2 to 6,
**characterized in that**
- the sheath (3) comprises the following composition: a mixture of poly-ether ether ketone and an inorganic filler in an admixture of at least 10 and maximum 40 percent by weight, with a particle size of 0.08 µm to 12 µm, and
- after termination of the process, a pressure of the sheath (3) on the glass fibre (2) is such that essentially no relative movement between the glass fibre (2) and the sheath (3) can occur.

11. Method according to claim 10, wherein parameters of extrusion are chosen so that, after termination of the process, the pressure of the sheath (3) on the glass fibre (2) is at least 120 N/mm².

12. Method according to claim 10, wherein the step of providing a glass fibre (2) comprises the step (S1) of providing a glass core (4) and the step (S2) of applying a coating (5) of inorganic-organic hybrid polymer onto the glass core (4).

13. Method according to claim 10, wherein the inorganic filler is a silicate.

14. Method according to claim 10, wherein the inorganic filler is a laminated silicate.

15. Method according to claim 10, wherein the inorganic filler is talcum, chalk, calcium carbonate, barium sulfate, boron nitride, silicon dioxide or bentonite.

## Revendications

1. Fibre optique solide (1) comprenant une fibre de verre (2) pourvue d'une gaine (3), dans laquelle:
- le diamètre extérieur de la gaine (3) est compris entre 0,2 mm et 1,2 mm,
- le rapport D/d entre le diamètre extérieur D de la gaine (3) et le diamètre d de la fibre de verre (2) est compris entre 2 et 6,
**caractérisé en ce que**
- la gaine (3) présente la composition suivante: un mélange de polyétheréthercétone et d'une charge inorganique dans un mélange d'au moins 10 et d'au plus 40 pour cent en poids avec une taille de grain allant de 0,08 µm à 12 µm, et
- une pression de la gaine (3) sur la fibre de verre (2) est telle qu'il n'y a pratiquement pas de mouvement relatif entre la fibre de verre (2) et la gaine (3).

2. Fibre optique solide (1) selon la revendication 1, dans laquelle la pression de la gaine (3) sur la fibre de verre (2) est d'au moins 120 N/mm².

3. Fibre optique solide (1) selon la revendication 1, dans laquelle la fibre de verre (2) se compose d'un coeur en verre (4) avec un revêtement (5) en polymère hybride inorganique-organique.

4. Fibre optique solide (1) selon la revendication 1, dans laquelle la charge inorganique est un silicate.

5. Fibre optique solide (1) selon la revendication 1, dans laquelle la charge inorganique est un silicate lamellaire.

6. Fibre optique solide (1) selon la revendication 1, dans laquelle la charge inorganique est du talc, de la craie, du carbonate de calcium, du sulfate de baryum, du nitrure de bore, du dioxyde de silicium ou de la bentonite.

7. Fibre optique solide (1) selon la revendication 1, dans laquelle le mélange de la charge inorganique est compris entre au moins 25 pour cent en poids et au plus 40 pour cent en poids.

8. Fibre optique solide (1) selon la revendication 1, dans laquelle le mélange de la charge inorganique est compris entre au moins 27 pour cent en poids et au plus 33 pour cent en poids.

9. Fibre optique solide (1) selon la revendication 1, dans laquelle la taille de grain est comprise entre au moins 0,1 µm et au plus 10 µm.

10. Procédé de fabrication d'une fibre optique solide (1), comprenant les étapes suivantes:
- fournir (S1, S2) une fibre de verre (2), et
- extruder (S3) une gaine (3) sur la fibre de verre (2), dans lequel
- le diamètre extérieur de la gaine (3) est compris entre 0,2 mm et 1,2 mm,
- le rapport D/d entre le diamètre extérieur D de la gaine (3) et le diamètre d de la fibre de verre (2) est compris entre 2 et 6,
**caractérisé en ce que**
- la gaine (3) présente la composition suivante: un mélange de polyétheréthercétone et d'une charge inorganique dans un mélange d'au moins 10 et d'au plus 40 pour cent en poids avec une taille de grain allant de 0,08 µm à 12 µm, et
- en fin de procédé, une pression de la gaine (3) sur la fibre de verre (2) est telle qu'il n'y a pratiquement pas de mouvement relatif entre la fibre de verre (2) et la gaine (3).

11. Procédé selon la revendication 10, dans lequel des paramètres d'extrusion sont choisis de manière qu'en fin de procédé, la pression de la gaine (3) sur la fibre de verre (2) est d'au moins 120 N/mm².

12. Procédé selon la revendication 10, dans lequel l'étape de fournir une fibre de verre (2) comprend l'étape (S1) de fournir un coeur en verre (4) et l'étape (S2) de revêtir le coeur en verre (4) avec un revêtement (5) en polymère hybride inorganique-organique.

13. Procédé selon la revendication 10, dans lequel la charge inorganique est un silicate.

14. Procédé selon la revendication 10, dans lequel la charge inorganique est un silicate lamellaire.

15. Procédé selon la revendication 10, dans lequel la charge inorganique est du talc, de la craie, du carbonate de calcium, du sulfate de baryum, du nitrure de bore, du dioxyde de silicium ou de la bentonite.
